# EUROPÄISCHE PATENTSCHRIFT

(11) **EP 2 681 091 B1**
(45) Veröffentlichungstag und Bekanntmachung des Hinweises auf die Patenterteilung: **26.03.2025**
(21) Anmeldenummer: 12703849.5
(22) Anmeldetag: 16.02.2012
(51) Int. Cl.: B60K 6/52, B60W 20/00, B60W 10/06, B60W 10/08, B60W 30/188, B60K 23/08

(54) **BESTIMMEN VON RAD- UND/ODER ACHSMOMENTVORGABEN IN EINEM KRAFTFAHRZEUG**
DETERMINING WHEEL AND/OR AXLE TORQUE SPECIFICATIONS IN A MOTOR VEHICLE
DÉTERMINATION D'UN COUPLE AUX ROUES ET/OU D'UN COUPLE AUX ESSIEUX PRÉDÉFINI DANS UN VÉHICULE AUTOMOBILE

(30) Priorität: 28.02.2011 DE 102011004862
(43) Veröffentlichungstag der Anmeldung: 08.01.2014
(73) Patentinhaber: Bayerische Motoren Werke Aktiengesellschaft, 80809 München (DE)
(72) Erfinder: PÖLTENSTEIN, Axel, 85386 Eching (DE); KRÄMER, Gerd, 80809 München (DE); FUCHS, Emanuel, 83607 Holzkirchen (DE); ÖSTERREICHER, Florian, 80333 München (DE); BICHLER, Franz, 82178 Puchheim (DE); COSFELD, Ralf, 82131 Stockdorf (DE); MEDER, Georg, 80469 München (DE)
(86) Internationale Anmeldenummer: PCT/EP2012/052691
(87) Internationale Veröffentlichungsnummer: WO 2012/116896

(56) Entgegenhaltungen:
- WO-A1-2010/031678
- WO-A1-2010/079024
- FR-A1- 2 901 762
- US-A1- 2006 025 906

## Beschreibung

Die Erfindung betrifft die Bestimmung von Momentenvorgaben in einem Kraftfahrzeug.

Zur Motorsteuerung von Kraftfahrzeugen wird häufig eine sogenannte Momentenstruktur oder Momentensteuerung verwendet. Hierbei wird in Abhängigkeit eines für die Stellung des Fahrpedals charakteristischen Fahrpedal-Signals oder eines die Fahrzeuglängsbewegung beeinflussenden Fahrerassistenzsystems sowie weiterer Momentenanforderungen schrittweise eine Momentenvorgabe berechnet. Aus der Momentenvorgabe bestimmt die Motorsteuerung dann die Motorparameter zur Ansteuerung der Aktoren des Motors. Beispiele für eine Momentenstruktur sind in den Druckschriften EP 1 277 940 A2 und EP 1 078 804 A2 beschrieben.

Bei gängigen Momentenstrukturen wird die Momentenvorgabe typischerweise als Kupplungsmoment für den Getriebeeingang berechnet, wie dies beispielsweise in der Druckschrift EP 1 277 940 A2 beschrieben ist. Bei zweiachsigen Fahrzeugen, bei denen beispielsweise ein Verbrennungsmotor mit Getriebe auf der einen Achse und ein Elektromotor auf der anderen Achse jeweils als Antrieb dienen, ist der Ansatz der Berechnung von Momentenvorgaben als Kupplungsmoment (Getriebeeingangsmoment) kaum oder nur über einen hohen Umrechnungsaufwand realisierbar. Dies liegt daran, dass das Kupplungsmoment als Getriebeeingangsniveau auf der einen Achse meistens auf einem anderen Momentenniveau als das der anderen Achse anliegt und somit nicht direkt auf die andere Achse übertragbar ist. Eine Equalisierung der beiden Momentenniveaus kann nur über einen erhöhten Rechenaufwand stattfinden.

FR 2 901 762 A1 beschreibt eine Vorrichtung, umfassend ein Mittel zum Erfassen der Fahrsituation und ein Berechnungsmittel, um ausgehend von dem Mittel zum Erfassen der Fahrsituation eine Längskraft oder ein Drehmoment zu berechnen, um mindestens ein Rad eines Zugs des Fahrzeugs anzutreiben. Das Berechnungsmittel umfasst ein Mittel zum Erstellen eines Haftungspotenzials, ein Mittel zum Testen von Bodenverbindungsbedingungen des Fahrzeugs, und ein Mittel zum Steuern der Längskraft in Abhängigkeit von dem Haftungspotenzial und dem Ergebnis des Testens der Bodenverbindungsbedingungen des Fahrzeugs.

EP 1 162 103 A2 beschreibt ein Steuergerät, das das Drehmoment eines Vorderradantriebsmotors und eines Hinterradantriebsmotors, die Drehzahl eines Generators und das Drehmoment eines Motors steuert. Das Steuergerät berechnet eine Soll-Antriebskraft eines Fahrzeugs auf der Grundlage eines Gaspedalbetätigungsbetrags und einer Fahrzeuggeschwindigkeit und unterteilt diese Soll-Antriebskraft in eine Soll-Antriebskraft für die Vorderräder und eine Soll-Antriebskraft für die Hinterräder. Die zum Antrieb des Generators erforderliche Leistung wird auf der Grundlage der Soll-Antriebskraft des Fahrzeugs berechnet, und die Soll-Drehzahl des Generators wird auf der Grundlage dieser Leistung und der Fahrzeuggeschwindigkeit berechnet.

WO 2010/031678 A1 beschreibt ein Verfahren zur Einstellung einer motorischen Antriebseinrichtung in einem Kraftfahrzeug mit mindestens zwei Antriebseinheiten, deren Antriebsmomente separat einstellbar sind. Zur Bestimmung einer verbrauchsoptimalen Momentenverteilung wird die Summe der Einzelverbräuche der Antriebseinheiten für eine Mehrzahl unterschiedlich verteilter Antriebsmomente ermittelt und aus der Summe der Einzelverbräuche das Verbrauchsoptimum bestimmt.

WO 2010/079024 A1 beschreibt ein Verfahren zum Betreiben eines Fahrzeuges, bei welchem jede der beiden mechanisch nicht gekoppelten Achsen des Fahrzeuges durch mindestens ein Antriebsaggregat angetrieben wird, wodurch ein Drehmoment auf die Räder der jeweiligen Achse übertragen wird. Um die auf unterschiedlichen Bodenverhältnissen auftretenden unterschiedlichen Reibwerte der Räder optimal zu nutzen, werden die Drehzahlen der Räder beider Antriebsachsen ermittelt und gemittelt, wobei eine Differenz aus den gemittelten Drehzahlen beider Achsen gebildet wird und ausgehend von dieser Differenz das Drehmoment mindestens einer Achse derart beeinflusst wird, dass Unterschieden in den gemittelten Drehzahlen der Räder entgegengewirkt wird.

Es ist daher Aufgabe der Erfindung, eine Momentenstruktur zur Bestimmung einer oder mehrerer Motormomentenvorgaben für einen oder mehrere im Kraftfahrzeug verwendete Antriebsmotoren anzugeben, weiche insbesondere bei der Verwendung mehrere Antriebsmotoren eine einfache Berechnung der Motormomente erlaubt.

Die Aufgabe wird durch die Merkmale der unabhängigen Patentansprüche gelöst.

Ein erster Aspekt der Erfindung betrifft ein Verfahren zum Bestimmen mindestens einer Motormomentenvorgabe in einem Kraftfahrzeug mit zwei Achsen, zwei Rädern pro Achse und mehreren Antriebsmotoren.

Das Verfahren umfasst ein Bestimmen einer gesamten Momentenvorgabe in Abhängigkeit eines für die Stellung des Fahrpedals charakteristischen Fahrpedal-Signals oder eines Signals eines die Fahrzeuglängsbewegung beeinflussenden Systems (insbesondere eines Fahrerassistenzsystems).

Das Verfahren umfasst ein Bestimmen für jede Achse jeweils einer auf die jeweilige Achse bezogenen Achsmomentenvorgabe, wobei die gesamte Momentenvorgabe in Abhängigkeit mindestens einer Momentenverteilungsangabe auf die beiden Achsen verteilt wird. Das Verfahren umfasst ein Bestimmen für jedes Rad mindestens einer ersten Achse, vorzugsweise beider Achsen, jeweils einer auf das jeweilige Rad bezogenen Radmomentenvorgabe in Abhängigkeit der bestimmten Achsmomentenvorgabe der jeweiligen Achse. Das Verfahren umfasst ein Bestimmen einer Motormomentenvorgabe für den jeweiligen Antriebsmotor in Abhängigkeit der bestimmten Radmomentenvorgabe für jedes Rad der ersten Achse und in Abhängigkeit entweder der bestimmten Radmomentenvorgabe für jedes Rad der zweiten Achse, wenn die jeweilige Rad bezogenen Radmomentenvorgaben für beide Achsen bestimmt werden oder der auf die zweite Achse bezogenen Achsmomentenvorgabe, wenn die jeweilige Rad bezogenen Radmomentenvorgaben nur für die erste Achse bestimmt werden. Für jedes Rad mindestens der ersten Achse, vorzugsweise beider Achsen, wird die jeweils auf das jeweilige Rad bezogene Radmomentenvorgabe in Abhängigkeit einer Information eines oder mehrerer Fahrdynamik-Regelsysteme nach oben und unten begrenzt. Die auf die zweite Achse bezogene Achsmomentenvorgabe wird in Abhängigkeit der Information des einen oder der mehreren Fahrdynamik-Regelsysteme nach oben und unten begrenzt, wenn die jeweiligen Rad bezogenen Radmomentenvorgaben nur für die erste Achse bestimmt werden.

Die Momentenstruktur wird also auf Basis der Radmomente der einzelnen Räder oder auf Basis der Achsmomente der beiden Achsen oder auf Basis eines Achsmoments und zweier Radmomente berechnet. Es werden also für sämtliche Räder radspezifische Radmomentenvorgaben oder zumindest achsspezifische Achsmomentenvorgaben bestimmt.

Gemäß dem Verfahren wird somit für jeden der ein oder mehreren Antriebsmotoren eine Motormomentenvorgabe für den jeweiligen Antriebsmotor in Abhängigkeit einer oder mehrerer Radmomentenvorgaben und/oder Achsmomentenvorgaben berechnet. Nach Berechnung der Radmomente bzw. Achsmomente wird also auf die Motorebene umgerechnet.

Die Berechnung von Radmomentenvorgaben für einzelne Räder oder Achsmomentenvorgaben für einzelne Achsen erlaubt die Realisierung einer zunächst generischen Momentstruktur, wobei die Momentenstruktur zunächst unabhängig vom konkret verwendeten Antriebskonzept ist und die Radmomentenvorgaben und Achsmomentenvorgaben erst später auf die verwendeten Motoren des Antriebskonzepts abgebildet werden. Dies trägt der steigenden Komplexität der verwendeten Antriebskonzepte mit einer Mehrzahl von Motoren (beispielsweise ein Verbrennungsmotor und zwei oder drei Elektromotoren) Rechnung. Beispielsweise kann das Kraftfahrzeug als Antriebsmotoren einen Verbrennungsmotor und eine elektrische Maschine umfassen, wobei der Verbrennungsmotor und die elektrische Maschine unterschiedliche Achsen oder Räder des Kraftfahrzeugs antreiben.

Die auf Radmomenten oder Achsmomenten basierende Momentenstruktur bietet also den Vorteil, völlig unabhängig von jeglichen Antriebskonzepten, der Anzahl und der Art der Antriebsaggregate zu sein. So kann die funktionale Basis für jegliche Antriebskonzepte aus Sicht der Momentenstruktur geschaffen und die Schnittstelle zu Fahrdynamik-Regelsystemen oder energetischen Betriebsstrategien entsprechend allgemein aufgesetzt werden.

Das erfindungsgemäße Verfahren ermöglicht einen Motoreingriff von Fahrdynamik-Regelsystemen (z. B. DSC - Dynamic Stability Control, ASR - Antriebsschlupfregelung oder ABS - Antiblockiersystem) in Bezug auf das jeweilige Einzelrad (bei Berechnung der jeweilige Radmomentvorgabe) oder zumindest in Bezug auf die jeweilige Achse in der Momentenstruktur. Vorzugsweise kann dazu zumindest eine Radmomentenvorgabe oder eine Achsmomentenvorgabe in Abhängigkeit der Information eines oder mehrerer Fahrdynamik-Regelsysteme bestimmt werden. Beispielsweise kann das Raddrehmoment oder Achsdrehmoment in Abhängigkeit einer solchen Information nach oben oder unten begrenzt werden.

Das Verfahren ermöglicht eine beliebige Momentenverteilung auf die Räder (bei Berechnung der entsprechenden Radmomente) oder Achsen (bei Berechnung der entsprechenden Achsmomente). Hierbei kann auch ein negatives Moment zur Energierekuperation für eine einzelne Achse (bzw. für die beiden Räder dieser Achse) bei Verwendung mindestens einer elektrischen Maschine zum Antrieb dieser Achse vorgegeben werden, während für die andere Achse ein positives Antriebsmoment vorgegeben wird.

Das Kraftfahrzeug umfasst vorzugsweise zum Antreiben einer der Achsen mindestens eine elektrische Maschine, welcher auch generatorisch zum Laden einer elektrischen Energiequelle betreibbar ist. Eine oder mehrere Achsmomentenvorgaben werden in diesem Fall vorzugsweise in Abhängigkeit einer Lade-Leistungsangabe, welche eine gewünschte Ladeleistung für die elektrische Maschine oder für die durch die elektrische Maschine antreibbare Achse angibt, bestimmt.

Zur Bestimmung eines oder mehrerer Motormomentenvorgaben können mehrere Radmomentenvorgaben für Räder derselben Achse miteinander kombiniert werden. Basierend auf der Kombination der Radmomentenvorgaben können bei einem Kraftfahrzeug mit zwei Antriebsmotoren zum Antreiben derselben Achse die Motormomentenvorgabe für den ersten Antriebsmotor und die Motormomentenvorgabe für den zweiten Antriebsmotor bestimmt werden.

Ein zweiter Aspekt der Erfindung ist auf eine Vorrichtung zum Bestimmen mindestens einer Motormomentenvorgabe in einem Kraftfahrzeug mit zwei Achsen, zwei Rädern pro Achse und mehreren Antriebsmotoren gerichtet. Die Vorrichtung kann insbesondere Teil eines Motorsteuergeräts sein. Die Vorrichtung umfasst Mittel zum Bestimmen einer gesamten Momentenvorgabe in Abhängigkeit eines für die Stellung des Fahrpedals charakteristischen Fahrpedal-Signals oder eines Signals eines die Fahrzeuglängsbewegung beeinflussenden Systems. Die Vorrichtung umfasst Mittel zum Bestimmen für jede Achse jeweils einer auf die jeweilige Achse bezogenen Achsmomentenvorgabe, wobei die gesamte Momentenvorgabe in Abhängigkeit mindestens einer Momentenverteilungsangabe auf die beiden Achsen verteilt wird. Die Vorrichtung umfasst Mittel zum Bestimmen für jedes Rad mindestens einer ersten Achse, vorzugsweise beider Achsen, jeweils einer auf das jeweilige Rad bezogenen Radmomentenvorgabe in Abhängigkeit der bestimmten Achsmomentenvorgabe der jeweiligen Achse.

Die Vorrichtung umfasst Mittel zum Bestimmen einer Motormomentenvorgabe für den jeweiligen Antriebsmotor in Abhängigkeit der bestimmten Radmomentenvorgabe für jedes Rad der ersten Achse und in Abhängigkeit entweder der bestimmten Radmomentenvorgabe für jedes Rad der zweiten Achse, wenn die jeweilige Rad bezogenen Radmomentenvorgaben für beide Achsen bestimmt werden, oder der auf die zweite Achse bezogenen Achsmomentenvorgabe, wenn die jeweilige Rad bezogenen Radmomentenvorgaben nur für die erste Achse bestimmt werden. Für jedes Rad mindestens der ersten Achse, vorzugsweise beider Achsen, wird die jeweils auf das jeweilige Rad bezogene Radmomentenvorgabe in Abhängigkeit einer Information eines oder mehrerer Fahrdynamik-Regelsysteme nach oben und unten begrenzt. Die auf die zweite Achse bezogene Achsmomentenvorgabe wird in Abhängigkeit der Information des einen oder der mehreren Fahrdynamik-Regelsysteme nach oben und unten begrenzt, wenn die jeweiligen Rad bezogenen Radmomentenvorgaben nur für die erste Achse bestimmt werden.

Die vorstehenden Ausführungen zum erfindungsgemäßen Verfahren nach dem ersten Aspekt der Erfindung gelten in entsprechender Weise auch für die erfindungsgemäße Vorrichtung nach dem zweiten Aspekt der Erfindung.

Die Erfindung wird nachfolgend unter Zuhilfenahme auf die beigefügten Zeichnungen anhand mehrerer Ausführungsbeispiele beschrieben. In diesen zeigen:
- Fig. 1: ein erstes Ausführungsbeispiel zum Bestimmen von Motormomentenvorgaben in einem Kraftfahrzeug mit einem Verbrennungsmotor und drei elektrischen Antriebsmaschinen; und
- Fig. 2: ein zweites Ausführungsbeispiel zum Bestimmen von Motormomentenvorgaben in einem Kraftfahrzeug mit einem Verbrennungsmotor und zwei elektrischen Antriebsmaschinen.

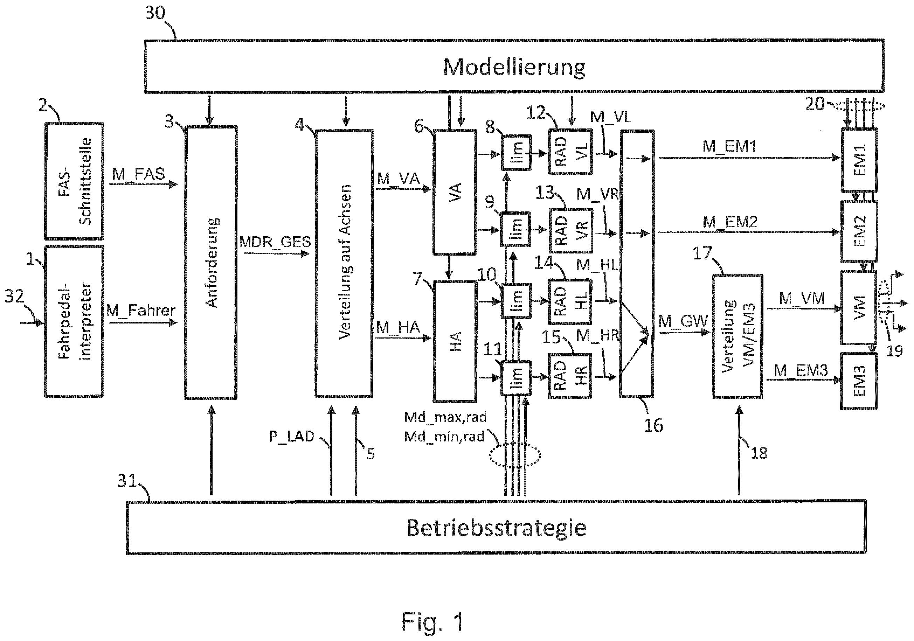

Fig. 1 zeigt ein erstes Beispiel für eine erfindungsgemäße Momentenstruktur, wobei das Kraftfahrzeug zum Antrieb der Hinterachse sowohl einen Verbrennungsmotor VM als auch eine elektrische Maschine EM3 umfasst. Zum Antrieb des linken und rechten Rads der Vorderachse sind jeweils eine elektrische Maschine EM1 bzw. EM2 vorgesehen, bei den elektrischen Maschinen EM1 und EM2 handelt es sich vorzugsweise um Radnabenmotoren.

Neben dem eigentlichen Berechnungspfad zur Berechnung der Momentenvorgaben sind noch ein Modellierungsblock 30, in dem unter anderem Ist-Werte und Stellgrenzen berechnet werden, sowie ein Block 31 zur Umsetzung der Betriebsstrategie vorhanden. Im Modellierungsblock 30 werden sowohl die aktuell gestellten Drehmomente als auch die Potentiale hinsichtlich eines Minimums und Maximums der einzelnen Stellaggregate berechnet. Mithilfe der Potentiale kann gewährleistet werden, dass die geforderten Drehmomente im Stellbereich der Antriebsaggregate liegen.

In Abhängigkeit einer durch das Signal 32 angegebenen Stellung des Fahrpedals wird in einem Fahrpedal-Interpreter 1 ein Fahrerwunschmoment M_Fahrer berechnet, insbesondere unter Berücksichtigung der Fahrzeuggeschwindigkeit. Bei dem Fahrerwunschmoment M_Fahrer kann es sich beispielsweise um ein Gesamtradmoment für sämtliche vier Räder handeln.

Ferner ist eine optionale Schnittstelle 2 zu einem die Fahrzeuglängsbewegung beeinflussenden Fahrerassistenzsystems (beispielsweise Tempomat oder Abstandstempomat) vorgesehen, welche eine Momentenvorgabe M_FAS des Fahrerassistenzsystems liefert.

In einer Stufe 3 wird entweder das Fahrerwunschmoment M_Fahrer oder das Moment M_FAS des Fahrerassistenzsystems ausgewählt. Schnittstellen aus der Modellierung 30 des Gesamtfahrzeuges und der Betriebsstrategie 31 ermöglichen eine Beeinflussung des geforderten Gesamtradmomentes bzw. dessen dynamischen Verlaufes in Abhängigkeit von diversen Einflussfaktoren, beispielsweise Umweltbedingungen, Betriebszustände der Antriebsaggregate und/oder Antriebsstrangkonstellationen.

Das resultierende ausgangsseitige Moment MDR_GES der Stufe 3 wird anschließend in der Achsverteilungsstufe 4 in Abhängigkeit einer Momentenverteilungsangabe 5 (z. B. 40% Vorderachse und 60 % Hinterachse) auf die Vorderachse und die Hinterachse verteilt; in Fig. 1 sind das resultierende Achsmoment der Vorderachse mit M_VA und das resultierende Achsmoment der Hinterachse mit M_HA bezeichnet.

Außerdem kann vorgesehen sein, dass die beiden elektrischen Maschinen EM1 und EM2 der Vorderachse generatorisch zum Laden einer elektrischen Energiequelle betreibbar sind, während das Fahrzeug über die Hinterachse angetrieben wird. Die in Fig. 1 dargestellte Eingangsgröße P_LAD beschreibt eine Ladeleistungsvorgabe für die beiden elektrischen Maschinen. In Abhängigkeit der Ladeleistungsvorgabe P_LAD werden die Achsmomentenvorgaben M_VA und M HA verstellt.

In den in Fig. 1 dargestellten Stufen 6 und 7 werden aus der Achsmomentenvorgabe M_VA der Vorderachse und der Achsmomentenvorgabe M_HA der Hinterachse Radmomentenvorgaben für die beiden Räder der Vorderachse bzw. Radmomentenvorgaben für die beiden Räder der Hinterachse berechnet. Aufgrund der unterschiedlichen Stellgeschwindigkeit der geforderten Drehmomente auf den beiden Achsen besteht optional die Möglichkeit, die Differenz zwischen dem geforderten und schließlich gestellten Drehmoment der dynamisch langsameren Achse auf der schnelleren Achse zwischenzeitlich zu kompensieren.

Die Stufen 8-11 dienen der Begrenzung der Radmomente auf vorgegebene einzelradbezogene maximale Momentenwerte Md_max,rad pro Rad und einzelradbezogene minimalen Momentenwerte Md_min,rad pro Rad, die von einem oder mehreren Fahrdynamik-Regelsystemen (beispielsweise DSC - Dynamic Stability Control, ASR - Antriebsschlupfregelung oder ABS - Antiblockiersystem) geliefert werden.

Eine nochmalige Limitierung auf die dynamisch schnell stellbaren Aggregatelimits ist in den optionalen Stufen 12-15 umgesetzt. An den Ausgängen der Stufen 12-15 ergeben sich die einzelradbezogenen Radmomentenvorgaben M_VL, M_VR, M_HL, M_HR des Rads vorne links, des Rads vorne rechts, des Rads hinten links bzw. des Rads hinten rechts.

Beginnend ab Stufe 16 werden die Radmomentenvorgaben (d. h. M_VL, M_VR, M_HL, M_HR) in Motormomentenvorgaben (s. M_EM1, M_EM2, M_VM, M_EM3) für die einzelnen Motoren EM1, EM2, VM und EM3 transformiert. So werden in Stufe 16 die Radmomentenvorgaben M_VL und M_VR durch Multiplikation mit der Getriebeübersetzung direkt in getriebeeingangsseitige Motormomentenvorgaben MJEM1 und M_EM2 für die Elektromotoren EM1 und EM2 übersetzt. Weiterhin werden in Stufe 16 die Radmomentenvorgaben M_HL und M_HR für die Räder der Hinterachse durch Addition miteinander kombiniert. Ferner wird die Kombination beider Radmomentenvorgaben in ein Getriebeeingangsmoment M_GW für das gemeinsame Getriebe des Verbrennungsmotors VM und der elektrischen Maschine EM3 durch Multiplikation mit der Getriebeübersetzung transformiert.

In der Momentenverteilungsstufe 17 wird das Getriebeeingangsmoment M_GW in eine Motormomentenvorgabe M_VM für den Verbrennungsmotor VM und in eine Motormomentenvorgabe M_EM3 für die elektrische Maschine EM3 in Abhängigkeit eines Ansteuersignals 18 aufgeteilt.

Aus der Motormomentenvorgabe M_VM des Verbrennungsmotor VM ergeben sich Motorparameter 19 (z. B. Zündzeitpunkt, Einspritzzeitpunkt, Einspritzmenge etc.) zum Betrieb des Verbrennungsmotors VM.

Die Motormomentenvorgaben M_EM1, M_EM2, M_VM und M_EM3 können ferner noch auf von der Einheit 30 vorgegebene maximale und minimale Momentenwerte 20 begrenzt werden.

Statt eines Antriebskonzepts mit einem Verbrennungsmotor VM und einer elektrischen Maschine EM3 zum Antrieb der Hinterachse sowie mit zwei elektrischen Maschinen EM1 und EM2 zum Antrieb der Vorderachse können bei einem alternativen Antriebskonzept der Verbrennungsmotor VM und die elektrische Maschine EM3 zum Antrieb der Vorderachse und die elektrischen Maschinen EM1 und EM2 zum Antrieb der Hinterachse verwendet werden. Die vorstehenden Ausführungen gelten für diesen Fall in entsprechender Weise, wobei dann Vorderachse und Hinterachse vertauscht sind.

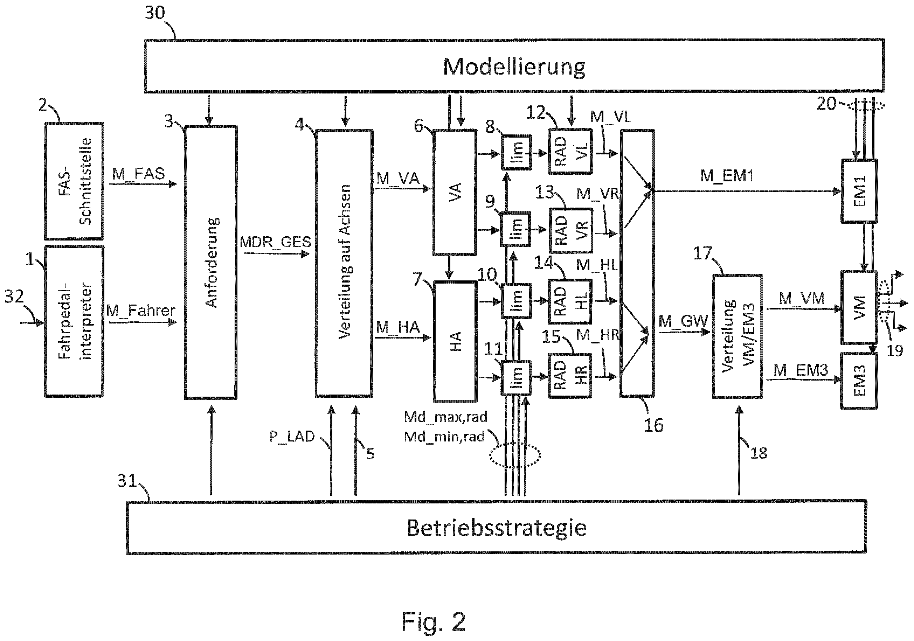

Fig. 2 zeigt ein zweites Beispiel für eine erfindungsgemäße Momentenstruktur, wobei das Kraftfahrzeug zum Antrieb der Hinterachse sowohl einen Verbrennungsmotor VM als auch eine elektrische Maschine EM3 umfasst. Zum Antrieb der Vorderachse ist im Unterschied zu Fig. 1 eine einzige elektrische Maschine EM1 vorgesehen.

Die vorstehenden Ausführungen zu Fig. 1 gelten weitestgehend auch für Fig. 2. Im Unterschied zu der Momentenstruktur in Fig. 1 werden in Fig. 2 durch die Stufe 16 die Radmomentenvorgaben M_VL und M_VR der Räder der Vorderachse kombiniert und auf eine getriebeeingangsseitige Motormomentenvorgabe M_EM1 für die elektrische Maschine EM1 unter Berücksichtigung der Getriebeübersetzung transformiert.

Statt eines Antriebskonzepts mit einem Verbrennungsmotor VM und einer elektrischen Maschine EM3 zum Antrieb der Hinterachse sowie mit einer einzigen elektrischen Maschinen EM1 zum Antrieb der Vorderachse können bei einem alternativen Antriebskonzept der Verbrennungsmotor VM und die elektrische Maschine EM3 zum Antrieb der Vorderachse und die elektrische Maschine EM1 zum Antrieb der Hinterachse verwendet werden. Die vorstehenden Ausführungen gelten für diesen Fall in entsprechender Weise, wobei dann Vorderachse und Hinterachse vertauscht sind.

Die in Fig. 2 gezeigte Momentenstruktur kann weiter dahingehend vereinfacht werden, dass statt der Verwendung eines Verbrennungsmotors VM und einer elektrischen Maschine EM3 nur ein Verbrennungsmotor zum Antrieb der Hinterachse vorgesehen wird. In diesem Fall fällt die Verteilungsstufe 17 weg. Selbstverständlich können auch in diesem Fall Vorderachse und Hinterachse vertauscht werden, wobei dann die Vorderachse von dem Verbrennungsmotor VM und die Hinterachse von der elektrischen Maschine EM1 angetrieben werden.

## Patentansprüche

1. Verfahren zum Bestimmen mindestens einer Motormomentenvorgabe (M_EM1, M_EM2, M_VM, M_EM3) für jeden von mehreren Antriebsmotoren (EM1, EM2, EM3, VM) in einem Kraftfahrzeug mit zwei Achsen und zwei Rädern pro Achse, mit den Schritten:
- Bestimmen einer gesamten Momentenvorgabe (MDR_GES) in Abhängigkeit eines für die Stellung des Fahrpedals charakteristischen Fahrpedal-Signals (32) oder eines Signals (M_FAS) eines die Fahrzeuglängsbewegung beeinflussenden Systems;
- Bestimmen für jede Achse jeweils einer auf die jeweilige Achse bezogenen Achsmomentenvorgabe (M_VA, M_HA), wobei die gesamte Momentenvorgabe (MDR_GES) in Abhängigkeit mindestens einer Momentenverteilungsangabe (5) auf die beiden Achsen verteilt wird;
- Bestimmen für jedes Rad mindestens einer ersten Achse, vorzugsweise beider Achsen, jeweils einer auf das jeweilige Rad bezogenen Radmomentenvorgabe (M_VL, M_VR, M_HL, M_HR) in Abhängigkeit der bestimmten Achsmomentenvorgabe (M_VA, M_HA) der jeweiligen Achse; und
- Bestimmen einer Motormomentenvorgabe (M_EM1, M_EM2, M_VM, M_EM3) für den jeweiligen Antriebsmotor (EM1, EM2, VM, EM3) in Abhängigkeit der bestimmten Radmomentenvorgabe (M_VL, M_VR, M_HL, M_HR) für jedes Rad der ersten Achse und in Abhängigkeit entweder der bestimmten Radmomentenvorgabe (M_VL, M_VR, M_ HL, M_HR) für jedes Rad der zweiten Achse, wenn die jeweiligen Rad bezogenen Radmomentenvorgaben (M VL, M_VR, M_HL, M_HR) für beide Achsen bestimmt werden, oder der auf die zweite Achse bezogenen Achsmomentenvorgabe (M_VA, M_HA), wenn die jeweiligen Rad bezogenen Radmomentenvorgaben (M VL, M_VR, M_HL, M_HR) nur für die erste Achse bestimmt werden;
**dadurch gekennzeichnet, dass**
- für jedes Rad mindestens der ersten Achse, vorzugsweise beider Achsen, die jeweils auf das jeweilige Rad bezogene Radmomentenvorgabe (M_VL, M_VR, M_HL, M_HR) in Abhängigkeit einer Information eines oder mehrerer Fahrdynamik-Regelsysteme (Md_max,rad; Md_min,rad) nach oben und unten begrenzt wird, und
- die auf die zweite Achse bezogene Achsmomentenvorgabe in Abhängigkeit der Information des einen oder der mehreren Fahrdynamik-Regelsysteme (Md_max,rad; Md_min,rad) nach oben und unten begrenzt wird, wenn die jeweiligen Rad bezogenen Radmomentenvorgaben (M_VL, M_VR, M_HL, M_HR) nur für die erste Achse bestimmt werden.

2. Verfahren nach Anspruch 1, wobei
- das Kraftfahrzeug zum Antreiben einer der Achsen mindestens eine elektrische Maschine (EM1, EM2, EM3) umfasst, welcher auch generatorisch zum Laden einer elektrischen Energiequelle betreibbar ist, und
- ein oder mehrere Achsmomentenvorgaben (M_VA, M_HA) in Abhängigkeit einer Lade-Leistungsangabe (P_LAD), welche eine gewünschte Ladeleistung für die elektrische Maschine oder für die durch die elektrische Maschine antreibbare Achse angibt, bestimmt werden.

3. Verfahren nach Anspruch 1 oder 2, wobei
zur Bestimmung einer oder mehrere Motormomentenvorgaben (M_VM, M_EM3) mehrere Radmomentenvorgaben (M_HL, M_HR) für Räder derselben Achse miteinander kombiniert werden.

4. Verfahren nach Anspruch 3, wobei
- das Kraftfahrzeug mindestens einen ersten (VM) und einen zweiten Antriebsmotor (EM3) zum Antreiben derselben Achse umfasst, und
- die Motormomentenvorgabe (M_VM) für den ersten Antriebsmotor (VM) und die Motormomentenvorgabe (M_EM3) für den zweiten Antriebsmotor (M_EM3) in Abhängigkeit der Kombination der mehreren Radmomentenvorgaben (M_HL, M_HR) bestimmt werden.

5. Verfahren nach einem der vorhergehenden Ansprüche, wobei
- das Kraftfahrzeug als Antriebsmotoren einen Verbrennungsmotor (VM) und eine elektrische Maschine (EM1, EM2) umfasst, und
- der Verbrennungsmotor und die elektrische Maschine unterschiedliche Achsen oder Räder des Kraftfahrzeugs antreiben.

6. Vorrichtung zum Bestimmen mindestens einer Motormomentenvorgabe (M_EM1, M_EM2, M_VM, M_EM3) für jeden von mehreren Antriebsmotoren (EM1, EM2, EM3, VM) in einem Kraftfahrzeug mit zwei Achsen und zwei Rädern pro Achse, umfassend:
- Mittel zum Bestimmen einer gesamten Momentenvorgabe (MDR_GES) in Abhängigkeit eines für die Stellung des Fahrpedals charakteristischen Fahrpedal-Signals (32) oder eines Signals (M_FAS) eines die Fahrzeuglängsbewegung beeinflussenden Systems;
- Mittel zum Bestimmen für jede Achse jeweils einer auf die jeweilige Achse bezogenen Achsmomentenvorgabe (M_VA, M_HA), wobei die gesamte Momentenvorgabe (MDR_GES) in Abhängigkeit mindestens einer Momentenverteilungsangabe (5) auf die beiden Achsen verteilt wird;
- Mittel zum Bestimmen für jedes Rad mindestens einer ersten Achse, vorzugsweise beider Achsen, jeweils einer auf das jeweilige Rad bezogenen Radmomentenvorgabe (M_VL, M_VR, M_HL, M_HR) in Abhängigkeit der bestimmten Achsmomentenvorgabe (M_VA, M_HA) der jeweiligen Achse; und
- Mittel zum Bestimmen einer Motormomentenvorgabe (M_EM1, M_EM2, M_VM, M_EM3) für den jeweiligen Antriebsmotor (EM1, EM2, VM, EM3) in Abhängigkeit der bestimmten Radmomentenvorgabe (M_VL, M_VR, M_HL, M_HR) für jedes Rad der ersten Achse und in Abhängigkeit entweder der bestimmten Radmomentenvorgabe (M_VL, M_VR, M_ HL, M_HR) für jedes Rad der zweiten Achse, wenn die jeweiligen Rad bezogenen Radmomentenvorgaben (M VL, M_VR, M_HL, M_HR) für beide Achsen bestimmt werden, oder der auf die zweite Achse bezogenen Achsmomentenvorgabe (M_VA, M_HA), wenn die jeweiligen Rad bezogenen Radmomentenvorgaben (M VL, M_VR, M_HL, M_HR) nur für die erste Achse bestimmt werden;
**dadurch gekennzeichnet, dass**
- für jedes Rad mindestens der ersten Achse, vorzugsweise beider Achsen, die jeweils auf das jeweilige Rad bezogene Radmomentenvorgabe (M_VL, M_VR, M_HL, M_HR) in Abhängigkeit einer Information eines oder mehrerer Fahrdynamik-Regelsysteme (Md_max,rad; Md_min,rad) nach oben und unten begrenzt wird, und
- die auf die zweite Achse bezogene Achsmomentenvorgabe in Abhängigkeit der Information des einen oder der mehreren Fahrdynamik-Regelsysteme (Md_max,rad; Md_min,rad) nach oben und unten begrenzt wird, wenn die jeweiligen Rad bezogenen Radmomentenvorgaben (M_VL, M_VR, M_HL, M_HR) nur für die erste Achse bestimmt werden.

## Claims

1. Method for determining at least one motor torque specification (M_EM1, M_EM2, M_VM, M_EM3) for each of several drive motors (EM1, EM2, EM3, VM) in a motor vehicle having two axles and two wheels per axle, comprising the steps of:
- determining a total torque specification (MDR_GES) depending on an accelerator pedal signal (32) characteristic of the position of the accelerator pedal or on a signal (M_FAS) of a system influencing the longitudinal movement of the vehicle;
- determining for each axle a respective axle torque specification (M_VA, M_HA) based on the respective axle, wherein the total torque specification (MDR_GES) is distributed to the two axles depending on at least one torque distribution indication (5);
- determining for each wheel of at least a first axle, preferably both axles, a respective wheel torque specification (M_VL, M_VR, M_HL, M_HR) based on the respective wheel depending on the determined axle torque specification (M_VA, M_HA) of the respective axle; and
- determining a motor torque specification (M_EM1, M_EM2, M_VM, M_EM3) for the respective drive motor (EM1, EM2, VM, EM3) depending on the determined wheel torque specification (M_VL, M_VR, M_HL, M_HR) for each wheel of the first axle and depending on either the determined wheel torque specification (M_VL, M_VR, M_HL, M_HR) for each wheel of the second axle if the respective wheel-based wheel torque specifications (M_VL, M_VR, M_HL, M_HR) are determined for both axles or the axle torque specification (M_VA, M_HA) based on the second axle if the respective wheel-based wheel torque specifications (M_VL, M_VR, M_HL, M_HR) are determined only for the first axle;
**characterized in that**
- for each wheel of at least the first axle, preferably both axles, the respective wheel torque specification (M_VL, M_VR, M_HL, M_HR) based on the respective wheel is upwardly and downwardly limited depending on information from one or more vehicle movement dynamics control systems (Md_max, rad; Md_min,rad), and
- the axle torque specification based on the second axle is upwardly and downwardly limited depending on the information from the one or more vehicle movement dynamics control systems (Md_max,rad; Md_min,rad) if the respective wheel-based wheel torque specifications (M_VL, M_VR, M_HL, M_HR) are determined only for the first axle.

2. Method according to Claim 1, wherein
- the motor vehicle, for driving one of the axles, comprises at least one electric machine (EM1, EM2, EM3), which can also be operated as a generator for charging an electrical energy source, and
- one or more axle torque specifications (M_VA, M_HA) are determined depending on a charging power indication (P_LAD), which indicates a desired charging power for the electric machine or for the axle which can be driven by the electric machine.

3. Method according to Claim 1 or 2, wherein
several wheel torque specifications (M_HL, M_HR) for wheels of the same axle are combined with another for determining one or more motor torque specifications (M_VM, M_EM3).

4. Method according to Claim 3, wherein
- the motor vehicle comprises at least one first drive motor (VM) and one second drive motor (EM3) for driving the same axle, and
- the motor torque specification (M_VM) for the first drive motor (VM) and the motor torque specification (M_EM3) for the second drive motor (M_EM3) are determined depending on the combination of the several wheel torque specifications (M_HL, M_HR).

5. Method according to one of the preceding claims, wherein
- the motor vehicle comprises, as drive motors, an internal combustion engine (VM) and an electric machine (EM1, EM2), and
- the internal combustion engine and the electric machine drive different axles or wheels of the motor vehicle.

6. Device for determining at least one motor torque specification (M_EM1, M_EM2, M_VM, M_EM3) for each of several drive motors (EM1, EM2, EM3, VM) in a motor vehicle having two axles and two wheels per axle, comprising:
- means for determining a total torque specification (MDR_GES) depending on an accelerator pedal signal (32) characteristic of the position of the accelerator pedal or on a signal (M_FAS) of a system influencing the longitudinal movement of the vehicle;
- means for determining for each axle a respective axle torque specification (M_VA, M_HA) based on the respective axle, wherein the total torque specification (MDR_GES) is distributed to the two axles depending on at least one torque distribution indication (5);
- means for determining for each wheel of at least a first axle, preferably both axles, a respective wheel torque specification (M_VL, M_VR, M_HL, M_HR) based on the respective wheel depending on the determined axle torque specification (M_VA, M_HA) of the respective axle; and
- means for determining a motor torque specification (M_EM1, M_EM2, M_VM, M_EM3) for the respective drive motor (EM1, EM2, VM, EM3) depending on the determined wheel torque specification (M_VL, M_VR, M_HL, M_HR) for each wheel of the first axle and depending on either the determined wheel torque specification (M_VL, M_VR, M_HL, M_HR) for each wheel of the second axle if the respective wheel-based wheel torque specifications (M_ VL, M_VR, M_HL, M_HR) are determined for both axles or the axle torque specification (M_VA, M_HA) based on the second axle if the respective wheel-based wheel torque specifications (M_VL, M_VR, M_HL, M_HR) are determined only for the first axle;
**characterized in that**
- for each wheel of at least the first axle, preferably both axles, the respective wheel torque specification (M_VL, M_VR, M_HL, M_HR) based on the respective wheel is upwardly and downwardly limited depending on information from one or more vehicle movement dynamics control systems (Md_max,rad; Md_min,rad), and
- the axle torque specification based on the second axle is upwardly and downwardly limited depending on the information from the one or more vehicle movement dynamics control systems (Md_max,rad; Md_min,rad) if the respective wheel-based wheel torque specifications (M_VL, M_VR, M_HL, M_HR) are determined only for the first axle.

## Revendications

1. Procédé de détermination d'au moins une consigne de couple moteur (M_EM1, M_EM2, M_VM, M_EM3) pour chacun d'une pluralité de moteurs d'entraînement (EM1, EM2, EM3, VM) dans un véhicule automobile ayant deux essieux et deux roues par essieu, comprenant les étapes suivantes :
- détermination d'une consigne de couple total (MDR_GES) en fonction d'un signal de pédale d'accélérateur (32) caractéristique de la position de la pédale d'accélérateur ou d'un signal (M_FAS) d'un système influençant le mouvement longitudinal du véhicule ;
- détermination, pour chaque essieu, respectivement d'une consigne de couple d'essieu (M_VA, M_HA) se rapportant à l'essieu respectif, la consigne de couple total (MDR_GES) étant répartie sur les deux essieux en fonction d'au moins une indication de répartition de couple (5) ;
- détermination, pour chaque roue d'au moins un premier essieu, de préférence des deux essieux, respectivement d'une consigne de couple de roue (M_VL, M_VR, M_HL, M_HR) se rapportant à la roue respective en fonction de la consigne de couple d'essieu (M_VA, M_HA) déterminée de l'essieu respectif ; et
- détermination d'une consigne de couple moteur (M_EM1, M_EM2, M_VM, M_EM3) pour le moteur d'entraînement (EM1, EM2, VM, EM3) respectif en fonction de la consigne de couple de roue (M_VL, M_VR, M_HL, M_HR) déterminée pour chaque roue du premier essieu et en fonction soit de la consigne de couple de roue (M_VL, M_VR, M_HL, M_HR) déterminée pour chaque roue du deuxième essieu, lorsque les consignes de couple de roue (M VL, M_VR, M_HL, M_HR) respectives se rapportant à la roue sont déterminées pour les deux essieux, soit de la consigne de couple d'essieu (M_VA, M_HA) se rapportant au deuxième essieu, lorsque les consignes de couple de roue (M VL, M_VR, M_HL, M_HR) respectives se rapportant aux roues sont déterminées uniquement pour le premier essieu ;
**caractérisé en ce que**
- pour chaque roue d'au moins le premier essieu, de préférence des deux essieux, la consigne de couple de roue (M_VL, M_VR, M_HL, M_HR) qui se rapporte à chaque fois à la roue respective est limitée vers le haut et vers le bas en fonction d'une information d'un ou de plusieurs systèmes de régulation de la dynamique de conduite (Md_max,rad ; Md_min,rad), et
- la consigne de couple d'essieu se rapportant au deuxième essieu est limitée vers le haut et vers le bas en fonction de l'information de l'un ou des plusieurs systèmes de régulation de la dynamique de conduite (Md_max,rad; Md_min,rad), lorsque les consignes de couple de roue (M_VL, M_VR, M_HL, M_HR) respectives se rapportant à la roue sont déterminées uniquement pour le premier essieu.

2. Procédé selon la revendication 1,
- le véhicule automobile comportant, pour l'entraînement de l'un des essieux, au moins une machine électrique (EM1, EM2, EM3), laquelle qui peut également fonctionner en mode générateur pour charger une source d'énergie électrique, et
- une ou plusieurs consignes de couple d'essieu (M_VA, M_HA) étant déterminées en fonction d'une indication de puissance de charge (P_LAD), laquelle indique une puissance de charge souhaitée pour la machine électrique ou pour l'essieu pouvant être entraîné par la machine électrique.

3. Procédé selon la revendication 1 ou 2,
plusieurs consignes de couple de roue (M_HL, M_HR) pour des roues du même essieu étant combinées entre elles pour déterminer une ou plusieurs consignes de couple moteur (M_VM, M_EM3).

4. Procédé selon la revendication 3,
- le véhicule automobile comportant au moins un premier (VM) et un deuxième moteur d'entraînement (EM3) pour entraîner le même essieu, et
- la consigne de couple moteur (M_VM) pour le premier moteur d'entraînement (VM) et la consigne de couple moteur (M_EM3) pour le deuxième moteur d'entraînement (M_EM3) étant déterminées en fonction de la combinaison des plusieurs consignes de couple de roue (M_HL, M_HR).

5. Procédé selon l'une des revendications précédentes,
- le véhicule automobile comportant, en tant que moteurs d'entraînement, un moteur à combustion interne (VM) et une machine électrique (EM1, EM2), et
- le moteur à combustion et la machine électrique entraînant des essieux ou des roues différents du véhicule automobile.

6. Dispositif de détermination d'au moins une consigne de couple moteur (M_EM1, M_EM2, M_VM, M_EM3) pour chacun d'une pluralité de moteurs d'entraînement (EM1, EM2, EM3, VM) dans un véhicule automobile ayant deux essieux et deux roues par essieu, comprenant :
- des moyens de détermination d'une consigne de couple total (MDR_GES) en fonction d'un signal de pédale d'accélérateur (32) caractéristique de la position de la pédale d'accélérateur ou d'un signal (M_FAS) d'un système influençant le mouvement longitudinal du véhicule ;
- des moyens de détermination, pour chaque essieu, respectivement d'une consigne de couple d'essieu (M_VA, M_HA) se rapportant à l'essieu respectif, la consigne de couple total (MDR_GES) étant répartie sur les deux essieux en fonction d'au moins une indication de répartition de couple (5) ;
- des moyens de détermination, pour chaque roue d'au moins un premier essieu, de préférence des deux essieux, respectivement d'une consigne de couple de roue (M_VL, M_VR, M_HL, M_HR) se rapportant à la roue respective en fonction de la consigne de couple d'essieu (M_VA, M_HA) déterminée de l'essieu respectif ; et
- des moyens de détermination d'une consigne de couple moteur (M_EM1, M_EM2, M_VM, M_EM3) pour le moteur d'entraînement (EM1, EM2, VM, EM3) respectif en fonction de la consigne de couple de roue (M_VL, M_VR, M_HL, M_HR) déterminée pour chaque roue du premier essieu et en fonction soit de la consigne de couple de roue (M_VL, M_VR, M_HL, M_HR) déterminée pour chaque roue du deuxième essieu, lorsque les consignes de couple de roue (M VL, M_VR, M_HL, M_HR) respectives se rapportant à la roue sont déterminées pour les deux essieux, soit de la consigne de couple d'essieu (M_VA, M_HA) se rapportant au deuxième essieu, lorsque les consignes de couple de roue (M VL, M_VR, M_HL, M_HR) respectives se rapportant aux roues sont déterminées uniquement pour le premier essieu ;
**caractérisé en ce que**
- pour chaque roue d'au moins le premier essieu, de préférence des deux essieux, la consigne de couple de roue (M_VL, M_VR, M_HL, M_HR) qui se rapporte à chaque fois à la roue respective est limitée vers le haut et vers le bas en fonction d'une information d'un ou de plusieurs systèmes de régulation de la dynamique de conduite (Md_max,rad ; Md_min,rad), et
- la consigne de couple d'essieu se rapportant au deuxième essieu est limitée vers le haut et vers le bas en fonction de l'information de l'un ou des plusieurs systèmes de régulation de la dynamique de conduite (Md_max,rad; Md_min,rad), lorsque les consignes de couple de roue (M_VL, M_VR, M_HL, M_HR) respectives se rapportant à la roue sont déterminées uniquement pour le premier essieu.
